# EUROPEAN PATENT APPLICATION

(11) **EP 4 811 893 A1**
(43) Date of publication of application: **23.09.2026**
(21) Application number: 24921026.1
(22) Date of filing: 02.02.2024
(51) Int. Cl.: H04W 64/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: Taor, Simon Edward William
(86) International application number: PCT/CN2024/075581
(87) International publication number: WO 2025/160971

(57) **Abstract**

The present disclosure provides a wireless communication method and device, which help a core network support positioning based on a positioning model, thereby improving positioning accuracy. The method includes the following. A first network element determines a first positioning mode of a terminal device, where the first positioning mode includes positioning the terminal device based on a first positioning model, and the first positioning model includes a second positioning model deployed on the terminal device and/or a third positioning model deployed on the first network element.

## Description

### TECHNICAL FIELD

This disclosure relates to the field of communication technologies, and more particularly, to a wireless communication method and a device

### BACKGROUND

To improve positioning accuracy of communication devices, solutions for determining location information based on a positioning model (e.g., an artificial intelligence (AI) model) have been proposed. However, how a core network supports positioning technologies based on the positioning model is an urgent problem to be solved.

### SUMMARY

The present disclosure provides a wireless communication method and a device, and various aspects related to the present disclosure are described below.

In a first aspect, a wireless communication method is provided. The wireless communication method includes the following. A first network element determines a first positioning mode of a terminal device. The first positioning mode includes positioning the terminal device based on a first positioning model, and the first positioning model includes a second positioning model deployed on the terminal device and/or a third positioning model deployed on the first network element.

In a second aspect, a wireless communication method is provided. The wireless communication method includes the following. A second network element sends a first request to a first network element, the first request being for requesting positioning of a terminal device. The first request is further used for the first network element to determine a first positioning mode of the terminal device, the first positioning mode includes positioning the terminal device based on a first positioning model, and the first positioning model includes a second positioning model deployed on the terminal device and/or a third positioning model deployed on the first network element.

In a third aspect, a method for wireless communication is provided. The wireless communication method includes the following. A terminal device sends first information to a second network element. The first information indicates capability information of the terminal device, the capability information of the terminal device includes whether the terminal device has a first capability of performing positioning based on a first positioning model, and the first positioning model includes a second positioning model deployed on the terminal device and/or a third positioning model deployed on a first network element.

In a fourth aspect, a method for wireless communication is provided. The wireless communication method includes the following. A third network element receives a fifth request sent by a second network element, the fifth request being for requesting subscription information of a terminal device. The subscription information indicates whether the terminal device is authorized to use a positioning service based on a first positioning model, and the first positioning model includes a second positioning model deployed on the terminal device and/or a third positioning model deployed on a first network element.

In a fifth aspect, a core network element is provided. The core network element is a first network element and includes a determining unit. The determining unit is configured to determine a first positioning mode of a terminal device, where the first positioning mode includes positioning the terminal device based on a first positioning model, and the first positioning model includes a second positioning model deployed on the terminal device and/or a third positioning model deployed on the first network element.

In a sixth aspect, a core network element is provided. The core network element is a second network element and includes a first sending unit. The sending unit is configured to send a first request to a first network element, the first request being for requesting positioning of a terminal device. The first request is further used for the first network element to determine a first positioning mode of the terminal device. The first positioning mode includes positioning the terminal device based on a first positioning model, and the first positioning model includes a second positioning model deployed on the terminal device and/or a third positioning model deployed on the first network element.

In a seventh aspect, a terminal device is provided. The terminal device includes a sending unit. The sending unit is configured to send first information to a second network element, the first information indicating capability information of the terminal device. The capability information of the terminal device includes whether the terminal device has a first capability of performing positioning based on a first positioning model, and the first positioning model includes a second positioning model deployed on the terminal device and/or a third positioning model deployed on a first network element.

In an eighth aspect, a core network element is provided. The core network element is a third network element and includes a receiving unit. The receiving unit is configured to receive a fifth request sent by a second network element, the fifth request being for requesting subscription information of a terminal device. The subscription information indicates whether the terminal device is authorized to use a positioning service based on a first positioning model, and the first positioning model includes a second positioning model deployed on the terminal device and/or a third positioning model deployed on a first network element.

In a ninth aspect, a core network element is provided. The core network element includes a memory and a processor, the memory is configured to store a program, and the processor is configured to invoke the program in the memory to perform some or all steps of the method according to the first aspect, the second aspect, or the fourth aspect.

In a tenth aspect, a terminal device is provided. The terminal device includes a memory and a processor, the memory is configured to store a program, and the processor is configured to invoke the program in the memory to perform some or all steps of the method according to the third aspect.

In an eleventh aspect, a communication system is provided in embodiments of the present disclosure. The system includes the foregoing core network element and/or the terminal device. In another possible design, the system may further include other devices interacting with the core network element and/or the terminal device in solutions provided by embodiments of the present disclosure.

In a twelfth aspect, a chip is provided in embodiments of the present disclosure. The chip includes a processor configured to invoke a program from a memory, to cause a device equipped with the chip to perform some or all steps of the methods according to the foregoing respective aspects.

In a thirteenth aspect, a computer-readable storage medium is provided in embodiments of the present disclosure. The computer-readable storage medium has a program stored thereon, the program causing a core network element and/or a terminal device to perform some or all steps of the methods according to the foregoing respective aspects.

In a fourteenth aspect, a computer program product is provided in embodiments of the present disclosure. The computer program product includes a program, and the program causes a core network element and/or a terminal device to perform some or all steps of the methods according to the foregoing respective aspects. In some implementations, the computer program product may be a software installation package.

According to embodiments of the present disclosure, the first positioning mode of the terminal device determined by the core network element (i.e., the first network element) includes a positioning mode based on the first positioning model. The first positioning model may be located on the terminal device and/or the first network element. It can be seen that the first network element can position the terminal device based on a positioning model on the terminal device and/or a positioning model on the first network element respectively, thereby helping to improve positioning accuracy.

### BRIEF DESCRIPTION OF THE DRAWINGS

FIG. 1 is a wireless communication system applicable to embodiments of the present disclosure.
FIG. 2 is a schematic diagram of a neural network applicable to embodiments of the present disclosure.
FIG. 3 is a schematic diagram of a convolutional neural network (CNN) applicable to embodiments of the present disclosure.
FIG. 4 is a schematic diagram of a location service architecture applicable to embodiments of the present disclosure.
FIG. 5 is a schematic flowchart of a wireless communication method provided in embodiments of the present disclosure.
FIG. 6 is a schematic flowchart of one possible implementation of the method illustrated in FIG. 5.
FIG. 7 is a schematic flowchart of another possible implementation of the method illustrated in FIG. 5.
FIG. 8 is a schematic flowchart of yet another possible implementation of the method illustrated in FIG. 5.
FIG. 9 is a schematic structural diagram of a core network element provided in embodiments of the present disclosure.
FIG. 10 is a schematic structural diagram of another core network element provided in embodiments of the present disclosure.
FIG. 11 is a schematic structural diagram of a terminal device provided in embodiments of the present disclosure.
FIG. 12 is a schematic structural diagram of yet another core network element provided in embodiments of the present disclosure.
FIG. 13 is a schematic structural diagram of an apparatus for communication according to embodiments of the present disclosure.

### DETAILED DESCRIPTION

Technical solutions of the present disclosure will be described below with reference to the accompanying drawings.

The technical solutions of embodiments of the present disclosure may be applicable to various communication systems, such as: a 5th generation (5G) system or a new radio (NR) system, a long-term evolution (LTE) system, an LTE frequency division duplex (FDD) system, an LTE time division duplex (TDD) system, etc. The technical solutions provided in the present disclosure may also be applicable to future communication systems, such as a sixth-generation (6G) mobile communication system, a satellite communication system, etc.

A network architecture applicable to the present disclosure is first briefly introduced.

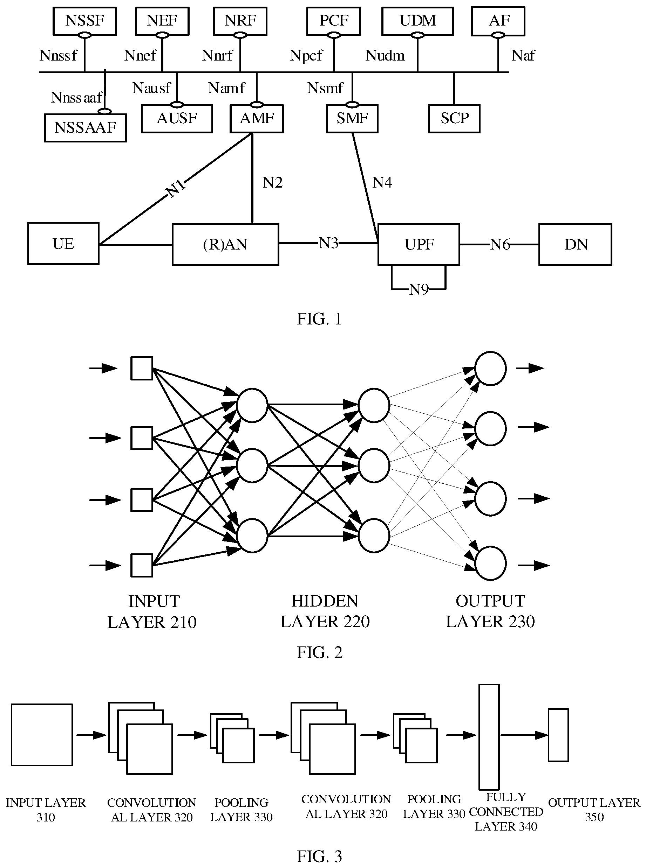

As an example, FIG. 1 illustrates an example diagram of a network architecture. The network architecture illustrated in FIG. 1 takes a 5G system as an example. One of the most important features of the 5G network architecture is a service-based architecture, that is, a core network element (service provider) can provide a specific service and enabling other network elements (consumers) to invoke such services via a defined application programming interface (API). The network architecture may include three parts: a terminal device part, a data network (DN) part, and an operator network part. The operator network may include one or more of the following functional entities: access network (AN) device, user plane function (UPF) entity, access and mobility management function (AMF) entity, session management function (SMF) entity, policy control function (PCF) entity, application function (AF) entity, network slice selection function (NSSF) entity, authentication server function (AUSF) entity, unified data management (UDM) entity, network exposure function (NEF) entity, network repository function (NRF) entity, network slice-specific authentication and authorization function (NSSAAF) entity, and the like. A part of the operator network other than an access network device part may be referred to as a core network part, and functional entities in the core network part may be referred to as core network devices.

Functions of respective parts or functional entities involved in the network architecture in a 5G network are exemplarily described below.

Terminal device: the terminal device may also be referred to as a user equipment (UE), an access terminal, a subscriber unit, a subscriber station, a mobile station (MS), a mobile terminal (MT), a remote station, a remote terminal, a mobile device, a user terminal, a terminal, a wireless communication element, a user agent, a user device, etc. The terminal device in embodiments of the present disclosure may be a device that provides voice and/or data connectivity to a user and is capable of connecting people, objects, and machines, such as a handheld device with a wireless connection function, a vehicle-in device, etc. The terminal device in embodiments of the present disclosure may be a mobile phone, a pad, a laptop computer, a tablet computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the UE may be used to act as a base station. For example, the UE may act as a scheduling entity that provides a sidelink signal between UEs in vehicle-to-everything (V2X), device-to-device (D2D), etc. For example, a cellular phone and a vehicle communicate with each other by using a sidelink signal. A cellular phone and a smart home device communicate with each other, without relaying a communication signal by using a base station.

Access network device: An access network device can be configured to provide a network access function for authorized terminal device in a specific area, and may use transmission channels of different qualities according to a level and service requirements of a terminal device. The access network device can manage radio resources, provide an access service for the terminal device, and further complete forwarding of control signals and data between the terminal device and a core network.

The access network device may be a device in a wireless network. The access network device may also be referred to as radio access network (RAN) device or network device, for example, the access network device may be a base station. The network device in embodiments of the present disclosure may refer to an RAN node (or device) that connects the terminal device to a wireless network. The base station may broadly cover various names in the following, or may be interchangeable with one of the following names, for example, an NodeB, an evolved NodeB (eNB), a next-generation NodeB (gNB), a relay station, an access point, a transmission reception point (TRP), a transmitting point (TP), a master MeNB, a secondary SeNB, a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, etc., or a combination thereof. The base station may also refer to a communication module, a modem, or a chip that is configured inside the device or the apparatus. The base station may also be a mobile switching center, a device acting as a base station in D2D communication, V2X communication, or machine-to-machine (M2M) communication, a network-side device in a 6G network, a device acting as a base station in a future communication system, etc. The base station may support networks of the same or different access technologies, and there is no limitation on specific technology and specific device form adopted by the access network device in embodiments of the present disclosure.

The base station may be fixed or mobile. For example, a helicopter or an unmanned aerial vehicle may be configured to act as a mobile base station, and one or more cells may move depending on a position of the mobile base station. In other examples, a helicopter or an unmanned aerial vehicle may be configured to serve as a device in communication with another network device.

In some deployments, the access network device in embodiments of the present disclosure may be a CU or a DU, the access network device may include a CU and a DU, or the access network device may also include an AAU

The access network device and terminal device may be deployed on land, which includes indoor or outdoor, handheld, wearable, or in-vehicle, may be deployed on water, or may be deployed in the air (such as airplanes, balloons, satellites, etc.). The scenarios in which the access network device and terminal device are located are not limited in embodiments of the present disclosure.

UPF entity: The UPF is a user plane function in the core network, and may be responsible for forwarding and receiving user data (such as service data flows) of a terminal device. Exemplarily, the UPF may receive user data from a DN and transmit the user data to the terminal device via an access network device; or the UPF may also receive user data from the terminal device via an access network device and then forward the user data to the DN. Transmission resources and scheduling functions that serve the terminal device in the UPF are managed and controlled by the SMF. A bearer between the terminal and the UPF network element may include: a user plane connection between the UPF network element and the access network device, and a channel established between the access network device and the terminal. The user plane connection is a quality of service (QoS) flow capable of transmitting data established between the UPF network element and the access network device.

AMF entity: The AMF is a mobility management function in the core network, and can be configured to implement other functions of a mobility management entity (MME) except session management, for example, lawful interception, access authorization (or authentication), and other functions. In some embodiments, in addition to mobility management for the terminal device, the AMF may also be responsible for forwarding of session management-related messages between the terminal device and the SMF.

SMF entity: The SMF is a session management function in the core network, and is mainly responsible for session management, internet protocol (IP) address allocation and management of the terminal device, selection of a manageable user plane function, policy control, or termination of a charging function interface, downlink data notification, configuration of routing information for the user plane function, and the like.

PCF entity: The PCF is a policy management function in the core network, and may be responsible for formulating policies related to mobility management, session management, charging, and the like for the terminal device. Specifically, the PCF may provide policy rule information and the like for control-plane functional entities (such as AMF entity, SMF entity, and the like) to manage and control mobility management, session management, and the like of the terminal device.

AF entity: The AF mainly supports interaction with a 3rd generation partnership project (3GPP) core network to provide services, for example, affecting data routing decisions, policy control functions, or providing some third-party services to the network side. In other words, the AF may be mainly used to transfer requirements of an application side to the network side. In some embodiments, the AF may be understood as a third-party server, for example, an application server in the Internet, which provides relevant service information including providing quality of service requirement information corresponding to a service for the PCF and sending user plane data information of the service to the A-UPF. In some embodiments, the AF may also be a content provider (CP).

DN: The DN refers to a network that can be configured to provide transmission data. The DN may be a private network such as a local area network, an external network not controlled by an operator such as the Internet, or a proprietary network jointly deployed by operators such as a network that provides an IP multimedia core network subsystem (IMS) service.

NSSF entity: The NSSF is a network slice selection function in the core network, and supported functions thereof include: selecting a network slice instance set serving the UE; determining allowed network slice selection assistance information (NSSAI), and determining a mapping to subscribed single-network slice selection assistance information (S-NSSAI) when necessary; determining configured NSSAI, and determining a mapping to subscribed S-NSSAI when necessary; determining an AMF set that may be used to query the UE, or determining a list of candidate AMFs based on configuration.

The AUSF can be configured to receive a request from the AMF for authenticating the terminal, request a key from the UDM, and forward the delivered key to the AMF for authentication processing.

The UDM may include functions such as generation and storage of user subscription data, management of authentication data, and the like, and supports interaction with an external third-party server.

The NEF may be used for capability exposure, that is, based on the NEF, capabilities of the network may be output to an external network. An external untrusted application may access internal data of the core network via the NEF to ensure network security. The NEF may provide functions such as external application QoS capability exposure, event subscription, AF request distribution, and the like.

The NRF may be configured for registration, management, and status monitoring of a core network element, so as to implement automatic management of a core network element. When a core network element is started, the core network element must register with the NRF so as to provide services. Registration information may include, for example, a type, an address, a service list, and the like of the core network element.

In addition, a 5G network further adds a network data analytics function (NWDAF) to the core network. Based on the NWDAF, data may be collected from various network elements, a network management system, and the like of the core network, and big data statistics, analysis, or intelligent data analysis may be performed, so as to obtain analysis or prediction data of the network side, and further assist each network element in more effectively controlling access of a terminal device according to a data analysis result.

In some embodiments, the network architecture illustrated in FIG. 1 may be divided into a user plane and a control plane, where the user plane may be used for data transmission, such as data transmission via a user plane function network element, and the control plane may be used for signaling transmission. For example, a part above a dashed line in FIG. 1 may be referred to as the control plane, and a part below the dashed line may be referred to as the user plane.

As an example, names of service-based interfaces provided by a control-plane network function are represented in an Nxxx manner. Herein, xxx is an abbreviation of an English name of a corresponding network function, for example: Nnef is a service-based interface provided by the network exposure function (NEF).

It can be understood that the foregoing functional entities in the core network may also be referred to as network elements, which is not limited in the present disclosure. Exemplarily, the UPF entity may also be referred to as a UPF network element, the AMF entity may also be referred to as an AMF network element, and the like.

It can also be understood that in some embodiments, an xx functional entity or an xx network element may also be directly referred to as xx for short, for example, the UPF entity (or UPF network element) may be referred to as UPF for short, and the AMF entity (or AMF network element) may be referred to as AMF for short. For ease of description, xx mentioned in embodiments of the present disclosure (such as UPF, AMF, and the like) may refer to an xx entity or an xx network element, which will not be repeated hereinafter.

In the network architecture illustrated in FIG. 1, communication may be performed between respective parts or functional entities via interfaces. For example, the terminal device may establish an access stratum (AS) connection with an AN via a Uu interface to exchange AS messages and transmit wireless data; the terminal device may establish a non-access stratum (NAS) connection with the AMF via an N1 interface to exchange NAS messages; the AN may be connected with the AMF via an N2 interface for transferring radio bearer control information and the like from the core network side to the AN; the UPF may perform data transmission with the AN via an N3 interface, perform data transmission with the DN via an N6 interface, and the like. For interfaces for connection between other parts or functional entities, reference may be made to FIG. 1, and details are not described herein again.

It can be understood that the network architecture illustrated above is merely exemplary illustration, and the network architecture applicable to embodiments of the present disclosure is not limited thereto, and any network architecture capable of implementing functions of the foregoing functional entities is applicable to embodiments of the present disclosure.

It can be understood that the access network device, AMF, SMF, UPF, PCF, and the like illustrated in FIG. 1 are merely names, and the names do not limit the device itself. In a 5G network and other future networks, entities corresponding to the access network device, AMF, SMF, UPF, PCF, and the like may also have other names, which are not specifically limited in the embodiments of the present disclosure.

It can be understood that interface names between functional entities illustrated in FIG. 1 are merely examples, and the interface names between the functional entities in specific implementation may also be other names, such as interface names between functional entities in a 6G network, which are not specifically limited in embodiments of the present disclosure.

It can be understood that all or part of functions of communication device in the present disclosure may also be implemented by software functions running on hardware, or by virtualized functions instantiated on a platform (such as a cloud platform).

It can be understood that the network architecture described in embodiments of the present disclosure is intended to describe technical solutions of the embodiments of the present disclosure more clearly, and does not constitute a limitation on technical solutions provided by embodiments of the present disclosure. Those skilled in the art may understand that with evolution of the network architecture, embodiments of the present disclosure are also applicable to similar technical problems.

### Artificial Intelligence (AI)

In recent years, AI research represented by neural networks has achieved remarkable results in many fields, and will play an important role in people's production and life for a long time to come.

FIG. 2 is a schematic diagram of a neural network applicable to embodiments of the present disclosure. The neural network illustrated in FIG. 2 can be divided into three types according to positions of different layers: an input layer 210, a hidden layer 220, and an output layer 230. Generally, the first layer is the input layer 210, the last layer is the output layer 230, and intermediate layers between the first layer and the last layer are all hidden layers 220. A sample can be input from the input layer 210, processed by the hidden layer 220, and a final result is generated at the output layer 230. Herein, each node represents a processing unit, which can be regarded as simulating a neuron. Multiple neurons form a layer of neural network, and multi-layer information transmission and processing construct an overall neural network.

With continuous development of neural network research, deep learning algorithms for neural networks have been proposed in recent years, in which more hidden layers are introduced. Feature learning through layer-by-layer training of a multi-hidden-layer neural network greatly improves learning and processing capabilities of the neural network, and is widely used in pattern recognition, signal processing, optimization combination, anomaly detection, and other fields.

Similarly, with the development of deep learning, convolutional neural networks (CNNs) have been further studied. FIG. 3 is a schematic diagram of a CNN applicable to embodiments of the present disclosure. A basic structure of the CNN may include: an input layer 310, multiple convolutional layers 320, multiple pooling layers 330, a fully connected layer 340, and an output layer 350. The introduction of the convolutional layers 320 and the pooling layers 330 effectively controls the sharp increase of network parameters, limits the number of parameters, exploits characteristics of a local structure, and improves the robustness of the algorithm.

### AI and Wireless Communication

Multiple use cases of applying AI to wireless communications are proposed in Release 18 (R18), for example: compressing and decompressing channel state information (CSI) by using AI/machine learning (ML) technologies, so as to reduce air interface transmission overhead and improve accuracy of CSI feedback information; predicting beam information in time domain/space domain by using AI/ML technologies, so as to reduce measurement overhead and time delay and improve accuracy of beam selection; predicting terminal device location information by using AI/ML technologies, so as to improve accuracy of terminal device location information in a non-direct path/non-line of sight (NLOS) scenario, and the like.

As an example, a project of RAN1 includes research on an AI/ML-enabled wireless air interface technology. Main research use cases of the technology include combination of AI and CSI feedback, combination of AI and beam management, and combination of AI and positioning technologies.

Compared with conventional wireless communication systems, current wireless communication systems provide greater flexibility, emphasizing wide applicability to different scenarios and full utilization of limited resources. However, most current work is still based on theoretical modeling of actual communication environments or simple parameter selection, and the gain brought by such a basic working mode is gradually weakened in variable scenarios and complex communication environments. In view of this situation, it is necessary to adopt new methods and ideas to be combined with conventional wireless communication theories and systems, so as to find a new way, break performance bottlenecks, and further improve performance of wireless communication systems.

Therefore, on the basis of multiple use cases of AI in wireless communications (for example, RAN1 use cases), RAN2 proposes research on life cycle management of AI models. Life cycle management of an AI model may include, for example, model generation, model deployment, model transmission, model monitoring, model update and other aspects.

In some embodiments, a model may be generated at a core network or a third-party server. In these scenarios, the third-party server or the core network needs to monitor a running effect of the model at a terminal device side in real time, so as to update the model in a timely manner and ensure efficient operation of the communication system.

As an example, in an architecture of a 5G system, a core network element NWDAF has AI capabilities. The NWDAF is divided into two functions: a model training logical function (MTLF) and an analytics logical function (AnLF). The MTLF is responsible for model training, and the AnLF is responsible for model inference.

As an example, in a use case of positioning terminal devices by using AI/ML technology, the following five schemes (cases) are proposed.

Scheme 1: The terminal device is equipped with an AI model, so the terminal device can perform positioning directly. That is, the terminal device directly outputs a location of the terminal device through the AI model.

Scheme 2a: Indirect positioning by a location management function (LMF) with assistance of a terminal device. That is, the terminal device side outputs a measurement result through the AI model, sends the measurement result to the LMF, and the LMF calculates the location of the terminal device through a conventional algorithm.

Scheme 2b: Direct positioning performed by an LMF with assistance of a terminal device. That is, the terminal device sends measurement data to the LMF, and the LMF side is equipped with an AI model to output the location of the terminal device.

Scheme 3a: Indirect positioning performed by an LMF with assistance of a next-generation RAN (NG-RAN). That is, the NG-RAN outputs a measurement result through an AI model, sends the measurement result to the LMF, and the LMF calculates the location of the terminal device through a conventional algorithm.

Scheme 3b: Direct positioning performed by an LMF with assistance of an NG-RAN. That is, the NG-RAN sends measurement data to the LMF, and the LMF side is equipped with an AI model to output the location of the terminal device.

### Positioning Technology and Location Service

For ease of understanding, a location service (LCS) of a 5G system is taken as an example for description below.

5G control plane-based location procedures include a mobile terminated location request procedure, a mobile originated location request procedure, a deferred mobile terminated location request procedure, a location service exposure procedure, a terminal device location privacy setting procedure, an assistance data broadcast procedure, and the like.

Mobile terminated location request procedure: a procedure in which an LCS client or an AF requests a current location or a location at a certain moment in the future of a target terminal device.

Mobile originated location request procedure: a procedure in which a terminal device requests the system to perform positioning on itself autonomously, and a positioning result can also be sent to a receiver specified by the terminal device.

Deferred mobile terminated location request procedure: positioning can be performed on a target terminal device when detection of occurrence of a relevant event (for example, the terminal device enters or moves out of a target area) or arrival of a given time is detected.

Location service exposure procedure: it defines processing after an NEF receives a location service request from a network element inside a network or an external AF.

Terminal device location privacy setting procedure: it allows a user to inform a network through terminal device whether the user is willing to be positioned; if not, a positioning procedure for the target terminal device is unable to be performed (except for a location request of a supervision service).

Assistance data broadcast procedure: a terminal device can receive assistance data from a network through the procedure, so as to further improve positioning accuracy; if the assistance data is encrypted, the terminal device can decrypt the assistance data by using a key obtained from the network.

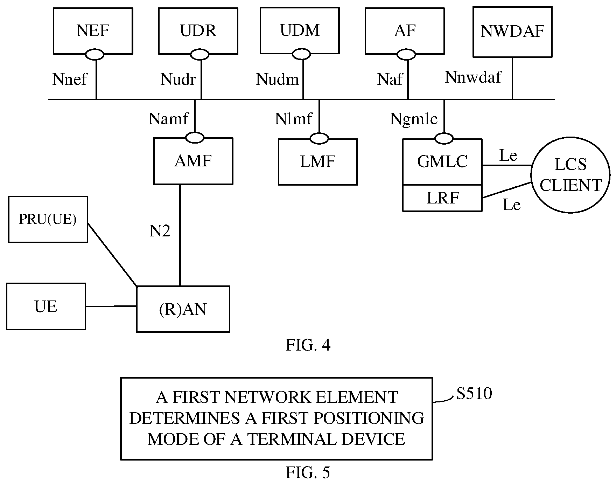

A location service based on signaling interaction of control plane functions of a 5G network is an end-to-end flow and belongs to a control plane location service. In a service-based location service architecture, network elements mainly involved include RAN, UE (terminal device), NEF, AMF, NWDAF, positioning reference unit (PRU), LMF, gateway mobile location center (GMLC), location retrieval function (LRF), unified data repository (UDR) and the like. As an example, FIG. 4 illustrates a service-based location service architecture of a 5G system.

In FIG. 4, Nxxx represents a service-based interface provided by a control plane network function. Le and N2 are interfaces between corresponding network elements respectively. A terminal device and a network device can interact with an LMF through protocols. For example, an LTE positioning protocol (LPP) can implement interaction of location measurements and location calculation results between the terminal device and an LMF. For another example, a new radio positioning protocol a (NRPPa) is used for transmission of positioning-related messages between next-generation RAN (NG-RAN) and an LMF.

Based on the architecture illustrated in FIG. 4, a requester of a location service may be UE, an LCS client, or an AF. An LCS client or an AF may request location information of a single target device or a group of target devices.

When a location service request from an NEF or a GMLC is received, a 5G system first determines an AMF serving a target device, and the AMF determines an LMF serving the target device. The LMF may provide positioning accuracy and time delay requirements according to the request. After the LMF selects a positioning method, a specific positioning flow can be triggered. If the selected positioning method is a network-based method, the LMF is responsible for performing positioning calculation (involving procedures such as obtaining measurement information required for positioning calculation from an access network and a terminal) and feeding back calculated location information and the like. If a UE-based positioning method is selected, the terminal device feeds back location information.

As described above, a scenario of applying AI to positioning is currently being researched. Predicting location information of a terminal device by using AI/ML technologies can improve accuracy of location information of a terminal device in an NLOS scenario. Further, five positioning technologies are also proposed in R18.

However, related communication systems only support conventional positioning technologies, such as positioning based on time difference of arrival (TDOA), positioning based on multi round trip time (Multi-RTT), and the like. When an LMF determines which positioning technology to adopt, the LMF usually selects from conventional positioning technologies, and AI-based positioning technologies may not be supported.

For example, Scheme 2b and Scheme 3b described above require an LMF to be equipped with an AI model to support AI-based positioning. To support these two positioning schemes, how an LMF obtains an AI model and how to support positioning through the AI model are problems to be solved.

For another example, for Scheme 1 and Scheme 2a, how an LMF learns that terminal device has AI positioning capabilities, so as to determine that the terminal device performs AI-based positioning, is also a problem to be solved.

Based on this, embodiments of the present disclosure provide a wireless communication method. By means of the method, when determining a positioning mode of terminal device, a core network element (for example, an LMF) can take into account a positioning model located on the terminal device or the LMF, so as to implement positioning based on the positioning model and improve accuracy of location information of the terminal device.

A detailed description of the wireless communication method provided by embodiments of the present disclosure is provided below with reference to FIG. 5 to FIG. 8.

FIG. 5 is a schematic flowchart of a wireless communication method provided by embodiments of the present disclosure. The method illustrated in FIG. 5 includes step S510. This step is performed by a first network element, and is described in detail below.

In step S510, the first network element determines a first positioning mode of a terminal device.

The terminal device may be any type of terminal devices described above. For example, the terminal device may be a target terminal device in a positioning technology.

In some embodiments, the terminal device side may be equipped with an AI/ML-based positioning model, so as to implement positioning based on the positioning model. For example, the terminal device may perform a positioning mode of Scheme 1 described above. In some embodiments, the terminal device may assist a positioning network element in a core network in performing AI/ML-based positioning. That is, although the terminal device side is not equipped with a positioning model, the terminal device side has capabilities to support AI-based positioning, such as collecting a positioning parameter, providing a measurement result, and the like. For example, the terminal device may perform a positioning mode of Scheme 2b described above.

The first network element may be a network element that determines a positioning technology corresponding to the terminal device. In some embodiments, the first network element may be one of core network elements related to positioning. For example, the first network element may be an LMF responsible for selecting a positioning mode. In some embodiments, the first network element is one of core network elements capable of positioning target device.

In some embodiments, the first network element may perform positioning or location information prediction on the terminal device.

In some embodiments, the first network element side may be equipped with an AI/ML-based positioning model, so as to implement AI model-based positioning. In some embodiments, the first network element may perform AI/ML-based positioning with assistance of the terminal device or a network device.

The first positioning mode of the terminal device refers to a mode of positioning the terminal device or determining/predicting location information of the terminal device. The positioning mode may also be referred to as a positioning scheme or a positioning technology, which is not limited herein.

The first positioning mode includes a mode of positioning the terminal device based on a first positioning model. In other words, the first positioning mode includes a mode of positioning the terminal device based on a first model, where the first model may be a model used for positioning. The first positioning model or the first model may be the AI/ML model described above.

In some embodiments, the first positioning mode may be a direct positioning mode or an indirect positioning mode.

In some embodiments, the first positioning model may include a direct positioning model and an indirect positioning model, to support different positioning modes.

In some embodiments, positioning the terminal device based on the first positioning model refers to determining location information of the terminal device by using the first positioning model. The location information may be current location information or predicted location information.

It can be understood that the first positioning mode does not limit a device that uses the first positioning model. That is, the first positioning mode is applicable to any device that can use the first positioning model to position the terminal device.

The first positioning model includes a second positioning model deployed on the terminal device and/or a third positioning model deployed on the first network element. Exemplarily, the first positioning model may be the second positioning model. Exemplarily, the first positioning model may be the third positioning model. Exemplarily, the first positioning model may include the second positioning model and the third positioning model.

The second positioning model deployed on the terminal device may be replaced with the second positioning model deployed on the terminal device side. That is, the second positioning model is a model usable by the terminal device. In some embodiments, the second positioning model may be deployed inside the terminal device, so as to be directly invoked by the terminal device to perform location information prediction. In some embodiments, the second positioning model is deployed in a device connected to the terminal device, and may be invoked by the terminal device through an interface to perform positioning.

As an example, the second positioning model is an AI positioning model directly usable by the terminal device.

The third positioning model deployed on the first network element may be replaced with the third positioning model deployed on the first network element side. In some embodiments, the third positioning model is an AI model directly usable by the first network element. As an example, the third positioning model may be deployed inside the first network element, so as to be directly invoked by the first network element to perform location information prediction. As an example, the third positioning model is deployed in a device connected to the first network element, and may be invoked by the first network element through an interface to perform positioning.

Optionally, when the first network element is an LMF, the third positioning model may be disposed on a functional entity jointly deployed with the LMF. For example, when the LMF is jointly deployed with an AnLF in an NWDAF, the third positioning model may also be disposed on the AnLF.

In some embodiments, the first network element may select the first positioning mode for the terminal device from multiple positioning modes. The multiple positioning modes may include conventional positioning technologies, AI-based positioning technologies, and other positioning technologies under improvement, which are not limited herein.

In some embodiments, the first positioning mode may be determined according to one or more of the following information: capability information of the terminal device; subscription information of the terminal device; and capability information of the first network element.

Optionally, the capability information of the terminal device includes whether the terminal device has a first capability of performing positioning based on the first positioning model, so that the first network element can better determine the first positioning mode. That is, the capability information of the terminal device includes positioning capability information of the terminal device. The first capability of performing positioning based on the first positioning model may also be referred to as an AI-based positioning capability.

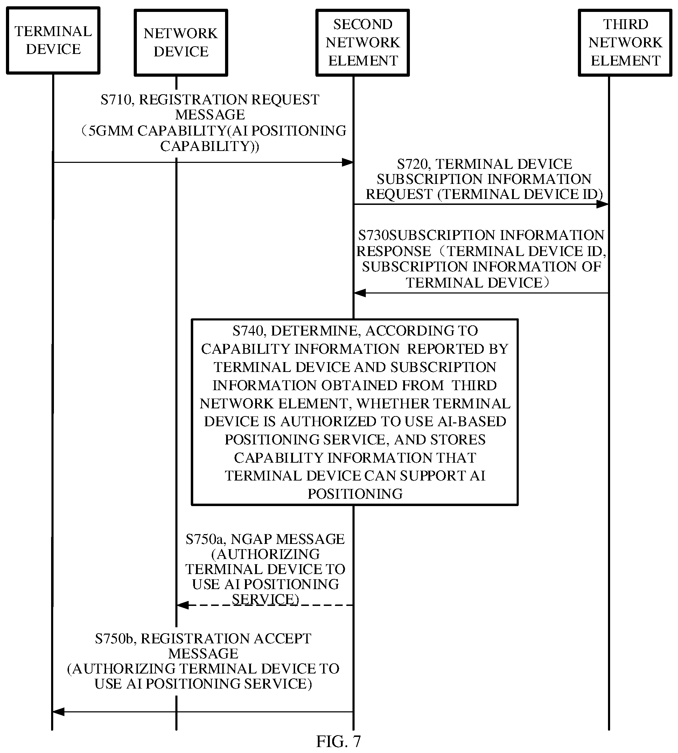

As an example, the terminal device needs to report whether it has the first capability to the network, which will be described in detail below with reference to FIG. 7.

As an example, that the terminal device has the first capability may be equivalent to that the terminal device supports AI-based positioning.

As an example, when the capability information of the terminal device indicates that the terminal device has the first capability, the first positioning mode may include Scheme 1 or Scheme 2a described above. For Scheme 1 or Scheme 2a, the first network element does not need to be equipped with a positioning model.

As an example, when the capability information of the terminal device indicates that the terminal device does not have the first capability, the first positioning mode may include Scheme 2b, Scheme 3a, or Scheme 3b described above. For these schemes, the terminal device does not need to be equipped with a positioning model.

Optionally, the subscription information of the terminal device includes whether the terminal device is authorized to use a positioning service based on the first positioning model. By defining the subscription information of the terminal device on a network side, the network side can authorize whether the terminal device can use the positioning service based on the first positioning model. Optionally, the subscription information may further indicate that the network side authorizes the terminal device to use the positioning service based on the first positioning model.

As an example, the subscription information of the terminal device may be stored in a third network element with a storage function. The third network element is, for example, a UDM.

As an example, during a registration procedure of the terminal device, new subscription information may be added to the third network element, so as to implement authorization for the terminal device to use a positioning service related to the first positioning model in embodiments of the present disclosure. Exemplarily, to complete the registration procedure, the core network needs to retrieve the subscription information stored in the third network element, so as to authorize whether the terminal device performs positioning based on the first positioning model. A procedure in which the core network retrieves the subscription information from the third network element will be exemplarily described below with reference to FIG. 7.

As an example, AI positioning subscription data may be added to the subscription information of the terminal device. Further, the AI positioning subscription data may be indicated by a first field. The first field may be an AI positioning service authorization field.

As a possible implementation, definition of subscription information of the terminal device related to positioning by using the first positioning model may be illustrated in Table 1.

**Table 1**

| Subscription Data Type | Field | Description |
|---|---|---|
| AI Positioning Subscription Data | AI Positioning Service Authorization | Indicates whether the UE is authorized to use an AI-based positioning service |

As an example, the subscription information that authorizes use of a positioning service based on the first positioning model may also be included in existing subscription information. That is, the UDM does not need to add new subscription information, but may add relevant indication meanings to the existing subscription information.

As an example, if the terminal device is not authorized to use the positioning service based on the first positioning model, the positioning mode of the terminal device does not include a mode that requires use of such positioning service to perform positioning.

As an example, when the subscription information of the terminal device includes a positioning service that the terminal device is authorized to use, the first network element may determine the first positioning mode as other positioning modes other than Scheme 1 and Scheme 2a described above even if the first capability information of the terminal device is not included in registration information. The other positioning modes do not require enhancement of the terminal device, nor do they require additional parameters to be notified to the terminal device. That is, even if the terminal device does not have the first capability, the terminal device may be positioned by using a positioning mode based on the first positioning model as long as the terminal device is authorized to use the positioning service based on the positioning model.

Optionally, the capability information of the first network element may indicate whether the first network element has a capability of performing positioning based on the first positioning model, so that the first network element determines the first positioning mode. For example, when the capability information of the first network element indicates that the first network element is equipped with the first positioning model, the first positioning mode may be Scheme 2b or Scheme 3b described above. For another example, the capability information of the first network element may indicate that the first network element supports a positioning mode based on the first positioning model. That is, the first network element may be configured to perform positioning even if the first network element is not equipped with the first positioning model.

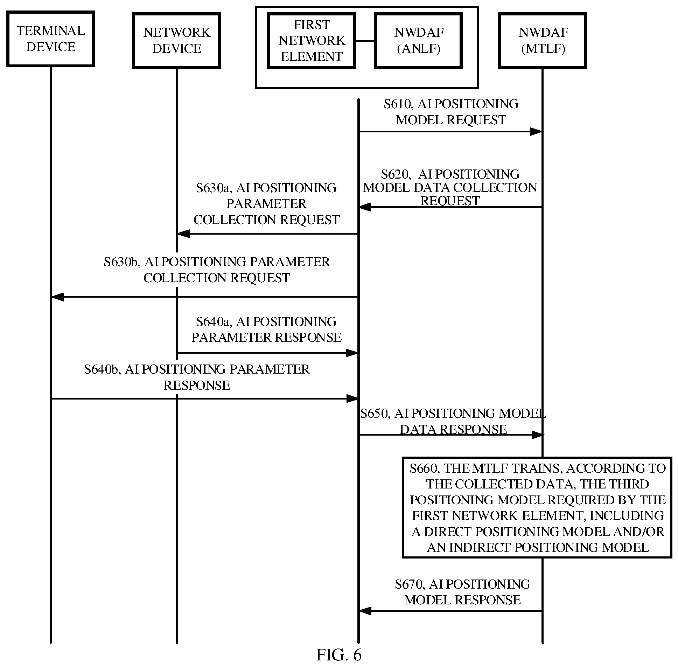

As an example, the first network element may obtain a positioning model from the NWDAF, so that the first network element performs direct positioning and/or indirect positioning based on the first positioning model. As described above, the positioning model deployed on the first network element is the third positioning model. A procedure in which the first network element obtains the third positioning model will be exemplarily described below with reference to FIG. 6.

Optionally, the capability information of the terminal device and the capability information of the first network element may indicate a deployment location of the first positioning model. For positioning models deployed at different locations, the first network element may determine the first positioning mode according to different information.

As an example, when the first positioning model is the second positioning model, the first positioning mode is determined according to at least one of the capability information of the terminal device or the subscription information of the terminal device. That is, when the terminal device side is equipped with the positioning model, the first network element does not need to consider its own capability when determining the first positioning mode.

As an example, when the first positioning model is the third positioning model, the first positioning mode is determined according to at least one of the capability information of the terminal device, the subscription information of the terminal device, or the capability information of the first network element. That is, when the terminal device side is not equipped with the positioning model, the first network element needs to consider the capabilities of the terminal device and itself when determining the first positioning mode.

In some embodiments, the first network element may further determine the first positioning mode according to a positioning requirement of the terminal device. The positioning requirement of the terminal device is, for example, a positioning accuracy requirement for the terminal device. When the positioning accuracy requirement is high, a model with higher accuracy is selected from multiple positioning models.

In some embodiments, the first network element may perform step S510 based on a positioning request for the terminal device.

As an example, the first network element may receive a positioning request sent by another network element. For example, the first network element may receive a first request sent by a second network element. The first request is used to request positioning of the terminal device. Description will be given below with reference to the second network element side.

As an example, the first network element may receive a positioning request for the terminal device sent by the terminal device or a third-party device to perform step S510.

In some embodiments, the first network element may perform step S510 based on the positioning request from the second network element.

In some embodiments, after performing step S510, the first network element may perform positioning of the terminal device according to the first positioning mode. Exemplarily, the first network element may perform a positioning process jointly with the terminal device to determine location information of the terminal device.

In some embodiments, the first network element may feed back the location information of the terminal device to a network element or device that sends the positioning request. Exemplarily, the first network element sends the location information of the terminal device to the second network element.

It can be seen from FIG. 5 that the first network element may determine the first positioning mode according to the first capability of the terminal device and its own capability information, so as to implement positioning of the terminal device based on the positioning model and improve positioning accuracy of the terminal device. When the first positioning mode is Scheme 2b or Scheme 3b, the first network element is required to have a capability of performing positioning based on the first positioning model (for example, an AI capability).

The model deployed on the first network element is the third positioning model. When the third positioning model is deployed on the first network element, the first network element may directly invoke the positioning model to position a target device, thereby more efficiently performing positioning based on the positioning model. To implement support of the first network element for AI-based positioning, embodiments of the present disclosure further provides a communication method, which enables the first network element to obtain the third positioning model.

As can be seen from the above, the NWDAF has an AI capability. Considering a deployment manner of a 5G system architecture, the NWDAF may send a trained model to the first network element, so that the first network element performs Scheme 2b or Scheme 3b described above.

In some embodiments, the first network element may directly request the third positioning model from the NWDAF.

In some embodiments, the first network element may be jointly deployed with the AnLF in the NWDAF to minimize impacts on the 5G network architecture. When the first network element is jointly deployed with the AnLF, the third positioning model may be obtained through interaction between the AnLF and the MTLF.

As an example, when the LMF is jointly deployed with the AnLF, an interface between the LMF and the AnLF is an internal implementation interface. Model interaction may be performed between the AnLF and the MTLF by using an existing interface and service.

As an example, the third positioning model may be trained at the MTLF. The MTLF may send the trained model to the AnLF, and inference is performed by the AnLF jointly deployed with the LMF.

In some embodiments, when the first network element needs the third positioning model, the first network element may send a second request to the MTLF through the AnLF. The second request is used to request the third positioning model, and thus may also be referred to as an AI model positioning request.

As an example, the second request may further include a required model type, that is, a model type of the third positioning model. Exemplarily, the third positioning model may be a direct positioning model and/or an indirect positioning model.

In some embodiments, if the MTLF does not have a trained model available for direct use, the MTLF returns a third request to the AnLF. The AnLF may forward the third request to the first network element. The third request is used to request a positioning parameter for training the third positioning model, and may also be referred to as an AI positioning model data collection request.

In some embodiments, the first network element may request the terminal device and/or a network device to collect a positioning parameter. Exemplarily, the first network element may interact with the terminal device and the network device respectively through existing LPP and NRPPa protocols respectively to obtain a training parameter.

As an example, the network device may be a network device corresponding to the terminal device. The network device corresponding to the terminal device may be a network device currently serving the terminal device, or a network device storing relevant data of the terminal device.

As an example, the first network element may send a fourth request to first device. The fourth request is used to collect a positioning parameter, and may also be referred to as a positioning parameter collection request. The first device may be a terminal device or a network device. When the first device is a terminal device, the fourth request is transmitted through an LPP; and when the first device is a network device corresponding to the terminal device, the fourth request is transmitted through an NRPPa.

In some embodiments, the first network element may receive a positioning parameter collected by the terminal device or the network device through different protocols, and then send the collected positioning parameter to the MTLF through the AnLF.

As an example, when the first device is a terminal device, the positioning parameter is transmitted through an LPP; and when the first device is a network device corresponding to the terminal device, the positioning parameter is transmitted through an NRPPa.

As an example, when a data volume on the terminal device side is large, the LPP may also be carried on a user plane. That is, the positioning parameter may be transmitted to the first network element through a UPF.

In some embodiments, the MTLF trains the third positioning model required by the first network element according to the collected data, and returns the trained third positioning model to the first network element through the AnLF. After the first network element deploys the positioning model, a foundation may be laid for subsequent selection, by the second network element, of a positioning network element with an AI capability.

For ease of understanding, a procedure in which the first network element obtains the third positioning model is exemplarily described below with reference to FIG. 6. FIG. 6 is described from a perspective of interaction among multiple network elements and devices. The terminal device may be UE, and the network device may be (R)AN.

Referring to FIG. 6, in step S610, the first network element sends an AI positioning model request, namely a second request, to the MTLF through the AnLF.

In step S620, when the MTLF does not have a trained model, the MTLF returns an AI positioning model data collection request, namely a third request, to the first network element through the AnLF.

In step S630a, if model training requires measurement data on a network device side, the first network element sends an AI positioning parameter collection request, namely a fourth request, to the network device through an NRPPa protocol.

In step S630b, if model training requires measurement data on a terminal device side, the first network element sends an AI positioning parameter collection request, namely the fourth request, to the terminal device through an LPP protocol.

In step S640a, the network device returns positioning-related training data, namely an AI positioning parameter response, through the NRPPa protocol.

In step S640b, the terminal device returns positioning-related training data, namely an AI positioning parameter response, through the LPP protocol.

In step S650, the first network element sends the collected data to the MTLF through the AnLF, namely an AI positioning model data response.

In step S650, the MTLF trains, according to the collected data, the third positioning model required by the first network element, including a direct positioning model and/or an indirect positioning model.

In step S670, the MTLF returns the trained model to the first network element through the AnLF.

Embodiments of the present disclosure are described above from the first network element side with reference to FIG. 5 and FIG. 6. As can be seen from the above, the first network element determines the first positioning mode based on a positioning request from the second network element. For the second network element, how to select the first network element and how to support positioning based on the first positioning model are also technical problems that can be solved by embodiments of the present disclosure.

Embodiments of the present disclosure are described below from the second network element and terminal device sides. In some embodiments, the second network element may be a network element responsible for access and mobility management of a terminal device. For example, the second network element may be an AMF. In some embodiments, the second network element may be one of core network elements that select a device for positioning a terminal device.

As can be seen from the above, the second network element may send a first request to the first network element to request the first network element to position the terminal device. The second network element may generate the first request based on a positioning request for the terminal device sent by another network element or device. Exemplarily, the positioning request for the terminal device may come from the terminal device or a third-party device. The third-party device is, for example, an AF or an external client.

As an example, the second network element receives a sixth request from second device to generate the first request. The sixth request is a positioning request for the terminal device, and is used to request location information of the terminal device. The second device may include the terminal device and/or a third-party device.

As an example, the sixth request may further carry a positioning accuracy requirement for the terminal device and a time requirement for returning a positioning result, so as to determine an appropriate first positioning mode.

As an example, after the second network element receives the location information of the terminal device sent by the first network element, the second network element may send the location information of the terminal device to the terminal device and/or the third-party device.

In some embodiments, the first request may include capability information of the terminal device and/or subscription information of the terminal device, so that the first network element determines the first positioning mode according to the information.

As an example, when the subscription information of the terminal device is sent by the second network element to the first network element, the subscription information may also be represented as authorization information for the terminal device. The authorization information for the terminal device is determined and stored by the second network element, which will be exemplarily described below with reference to FIG. 7.

The capability information of the terminal device may be reported by the terminal device to the second network element. In some embodiments, when the second network element has stored the capability information of the terminal device, the second network element may also directly send the stored capability information to the first network element via the first request.

In some embodiments, the terminal device may report whether it has the first capability to the network through first information. The first information may indicate that the terminal device has a positioning capability based on a positioning model, so that the first network element and the second network element support positioning based on the first positioning model.

As an example, the second network element receives first information sent by the terminal device. The first information is used to indicate capability information of the terminal device. The capability information of the terminal device includes whether the terminal device has a first capability of performing positioning based on the first positioning model.

In some embodiments, the first information may further indicate one or more of the following: whether the first capability is a direct positioning capability or an indirect positioning capability; an implementation condition of the first capability; or a parameter related to the first capability.

As an example, the first information may further indicate whether the terminal device has the direct positioning capability or the indirect positioning capability, so that the first network element determines the first positioning mode. For example, the direct positioning capability corresponds to Scheme 1 in the positioning model-based positioning schemes described above. For another example, the indirect positioning capability corresponds to Scheme 2a in the positioning model-based positioning schemes described above.

In some embodiments, when the first positioning model is the second positioning model, the capability information of the terminal device further includes a parameter of the second positioning model. As can be seen from the above, when the positioning model is deployed on the terminal device side, the positioning model is the second positioning model. When the terminal device side is equipped with the second positioning model, the first information may further include a model parameter of the second positioning model, so that the first network element determines the first positioning mode.

As an example, the first information may further indicate a condition of the first capability possessed by the terminal device. For example, in which time period or at which locations the terminal device can support positioning based on the first positioning model.

As an example, the first information may further indicate a parameter related to the first capability. The related parameter is, for example, positioning accuracy.

In some embodiments, the first information may be registration request information of the terminal device. That is, the terminal device may send the first information during registration, so that the second network element stores the capability information of the terminal device as early as possible.

As an example, a registration request message includes a 5G mobility management (MM) capability parameter. The 5GMM capability parameter may include information about the first capability.

In some embodiments, after receiving the first information, the second network element may send a fifth request to a third network element. The fifth request is used to request the subscription information of the terminal device described above. Then, the second network element receives the subscription information of the terminal device sent by the third network element.

In some embodiments, the second network element may determine, according to the capability information and the subscription information of the terminal device, whether the terminal device is authorized to use a positioning service based on the first positioning model. Further, the second network element may store the capability information and the subscription information.

As an example, when the second network element determines that the terminal device is authorized to use the positioning service based on the first positioning model, the second network element may send authorization information to the terminal device. Exemplarily, the second network element may send the authorization information by sending a registration accept message.

For example, when the terminal device has the first capability and the subscription information of the terminal device indicates that the terminal device is authorized to use the positioning service based on the first positioning model, the second network element sends the authorization information to the terminal device.

As an example, the second network element may further send information indicating that the terminal device is authorized to use the positioning service based on the first positioning model to a network device, so that the network device can perform a positioning mode based on Scheme 3a.

As an example, the second network element sends authorization information to a network device corresponding to the terminal device. The authorization information is carried in a next-generation application protocol (NGAP) message.

A method for the second network element to determine the capability information and the subscription information of the terminal device is described above. For ease of understanding, description is exemplarily provided below with reference to FIG. 7. FIG. 7 is described from a perspective of interaction among terminal device, network device (NG-RAN), a second network element, and a third network element.

Referring to FIG. 7, in step S710, the terminal device sends a registration request message to the second network element. Registration information sent by the terminal device may include a 5GMM capability parameter. The 5GMM capability parameter may include an AI positioning capability parameter, namely a parameter related to the first capability.

In step S720, the second network element sends a subscription information request, namely a fifth request, to the third network element. Exemplarily, the second network element may obtain the subscription information of the terminal device from the third network element by using an identity (ID) of the terminal device.

In step S730, the third network element returns the subscription information of the terminal device to the second network element. The response information may include an ID of the terminal device and subscription information related to positioning (AI positioning) based on the first positioning model of the terminal device.

In step S740, the second network element determines, according to the capability information (capability parameter) reported by the terminal device and the subscription information of the terminal device obtained from the third network element, whether the terminal device is authorized to use an AI-based positioning service. Further, the second network element may further store the capability information that the terminal device can support AI positioning.

In step S750a, the second network element sends information indicating that the terminal device is authorized to use the AI positioning service, namely authorization information for the terminal device, to the network device through an NGAP message.

In step S750b, the second network element sends a registration accept message to the terminal device. The message includes authorization for the terminal device to use the AI positioning service.

The first capability of the terminal device defined in embodiments of the present disclosure is described above with reference to FIG. 7. In a subsequent positioning procedure, the second network element may select an LMF that meets a condition to determine the first network element according to information stored in the procedure, so that the network can correctly execute a positioning procedure based on the first positioning model.

In some embodiments, the second network element may determine the first network element from multiple network elements according to one or more of the following information: capability information of the terminal device; subscription information of the terminal device; or capability information of the multiple network elements.

In some embodiments, the multiple network elements may all be network elements related to positioning. For example, the multiple network elements may be multiple LMFs.

In some embodiments, the capability information of the multiple network elements may be new capabilities supported by the network elements, namely capabilities of performing positioning based on the first positioning model. As described above, the capability of performing positioning based on the first positioning model may also be referred to as an AI positioning capability.

As an example, the capability information of the multiple network elements may include that a network element supports a direct positioning capability and/or an indirect positioning capability.

In some embodiments, the capability information of the multiple network elements is determined according to capability information of some or all network elements of the multiple network elements configured by the second network element. That is, some or all network elements of the multiple network elements have configured information about whether they support the AI positioning capability in the second network element. The second network element may determine the capability information of some or all network elements of the multiple network elements through local configuration.

In some embodiments, the capability information of the multiple network elements is configured in another network element. The other network element is, for example, an NRF. The second network element may determine the capability information of the multiple network elements through the NRF. Exemplarily, the second network element may request the NRF for multiple network elements that meet a condition. After the NRF feeds back addresses of the network elements that meet the condition, the second network element may determine the capability information of the multiple network elements.

In some embodiments, the multiple network elements are determined through configuration of the second network element and/or the NRF. That is, the second network element may discover multiple network elements that can support the AI positioning capability through local configuration or the NRF.

As an example, when there is only one positioning network element that meets a condition, this positioning network element is the first network element.

In some embodiments, if the second network element stores information that the terminal device can support the first capability and authorizes, according to the subscription information, the terminal device to perform a service based on the first positioning model, the second network element may select an LMF that does not need to support the AI positioning capability as the first network element. If the information of the terminal device stored in the second network element does not include information that the terminal device supports the first capability and authorizes, according to the subscription information, the terminal device to perform a service based on the first positioning model, the second network element may select an LMF that can support the AI capability as the first network element.

In some embodiments, when the first positioning model is the third positioning model, the first network element is determined through initial selection or reselection of the second network element from the multiple network elements. That is, when the first positioning mode is positioning based on the third positioning model deployed on the first network element, a procedure in which the second network element selects the first network element may include initial selection and reselection.

As an example, the second network element initially selects an LMF that does not support the AI capability as the first network element. However, the LMF determines that AI-based positioning needs to be adopted according to a positioning accuracy requirement and a time requirement for the terminal device. In such a scenario, the LMF returns an indication that positioning cannot be satisfied to the second network element. Based on the indication, the second network element reselects an LMF that meets the requirement as the first network element.

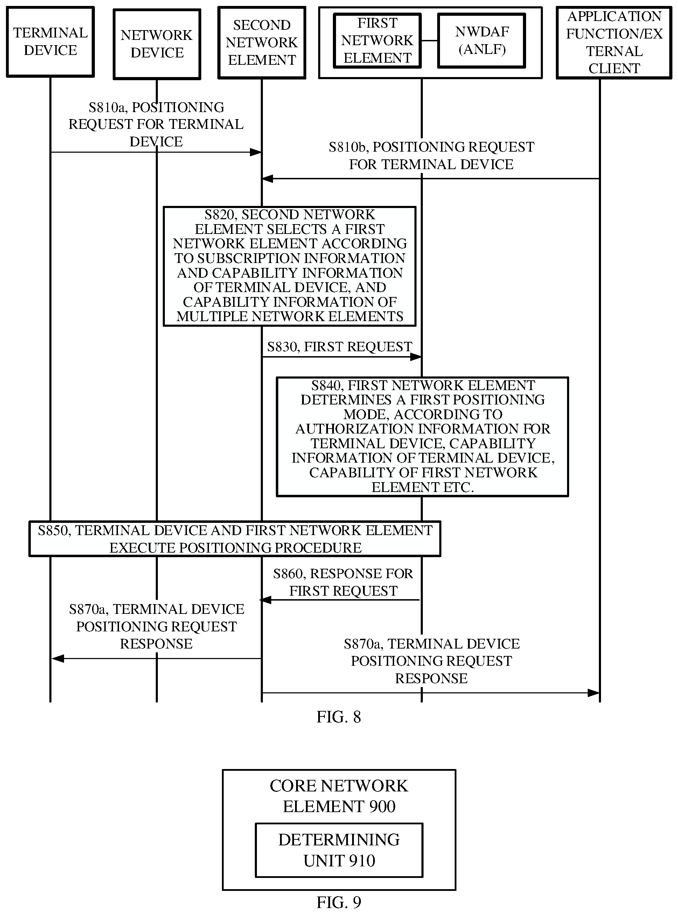

For ease of understanding, description is exemplarily provided below with reference to FIG. 8. The method illustrated in FIG. 8 is described from a perspective of interaction among multiple devices. The application function/external client may also be referred to as third-party device.

Referring to FIG. 8, in step S810a and step S810b, a terminal device, an application function, or an external client may send a positioning request for the terminal device, namely a sixth request, to a second network element respectively. When the terminal device or a third party wants to know a location of the terminal device, the positioning request for the terminal device may be sent to the second network element. The request carries a positioning accuracy requirement and a time requirement for returning a positioning result.

In step S820, the second network element selects a first network element according to subscription information and capability information of the terminal device, the capability information of multiple network elements, and the like. The first network element may be an LMF that meets a condition. The selection of the first network element may include initial selection and/or reselection. In addition, the capability information, the subscription information, and the authorization information for the terminal device may be information stored in the second network element. The capability information of the multiple network elements may be pre-configured by the second network element or determined through the NRF.

In step S830, the second network element sends a positioning request, namely a first request, to the first network element. The first request may include AI capability information of the terminal device and authorization information for the terminal device, as well as a positioning accuracy requirement and a time requirement for returning a positioning result for the terminal device.

In step S840, the first network element determines a positioning mode to be executed, namely the first positioning mode, according to its own capability, the first capability information, the authorization information for the terminal device, and the positioning accuracy requirement and the time requirement for returning the positioning result for the terminal device.

In step S850, the terminal device and the first network element execute a positioning procedure. The positioning procedure is a procedure of the first positioning mode.

In step S860, the first network element sends location information of the terminal device, namely a response for the first request, to the second network element.

In step S870a and step S870b, the second network element sends the location information of the terminal device, namely a terminal device positioning request response, to the terminal device and the third-party device.

The positioning method illustrated in FIG. 8 is a complete procedure architecture, based on which Scheme 1, Scheme 2a, Scheme 2b, and Scheme 3b based on AI positioning described above can be implemented. It can be seen that, in the positioning method, the second network element can select and reselect the first network element based on a specific parameter, capability information, and the like, so as to flexibly meet AI-based positioning modes in different scenarios.

In the method according to embodiments of the present disclosure, the AI positioning capability and the subscription information of the terminal device are introduced. The selection and reselection of the first network element by the second network element enable the first network element to support an AI-based positioning mode. Further, a complete procedure architecture is designed in embodiments of the present disclosure to support multiple AI-based positioning modes for the core network and the terminal device. Specifically, by introducing multiple aspects such as an AI positioning capability parameter of the terminal device, subscription data of the terminal device, and an AI positioning capability supported by the LMF, a complete procedure architecture capable of supporting multiple positioning scenarios is designed. Based on the method, when conventional positioning accuracy is insufficient, the terminal device and the core network can accurately execute an AI-based positioning mode, thereby improving the positioning accuracy.

Method embodiments of the present disclosure are described in detail above with reference to FIG. 1 to FIG. 8. Apparatus embodiments of the present disclosure are described in detail below with reference to FIG. 9 to FIG. 13. It can be understood that the description of the apparatus embodiments corresponds to the description of the method embodiments, and therefore, parts not described in detail may refer to the foregoing method embodiments.

FIG. 9 is a schematic structural diagram of a core network element provided in an embodiment of the present disclosure. The core network element 900 may be a first network element. The core network element 900 may include a determining unit 910.

The determining unit 910 is configured to determine a first positioning mode of a terminal device, the first positioning mode including positioning the terminal device based on a first positioning model, the first positioning model including a second positioning model deployed on the terminal device and/or a third positioning model deployed on the first network element.

In some embodiments, the first positioning mode is determined based on one or more of the following: capability information of the terminal device; subscription information of the terminal device; or capability information of the first network element.

In some embodiments, when the first positioning model is the second positioning model, the first positioning mode is determined based on at least one of capability information of the terminal device or subscription information of the terminal device.

In some embodiments, when the first positioning model is the third positioning model, the first positioning mode is determined based on at least one of capability information of the terminal device, subscription information of the terminal device, or capability information of the first network element.

In some embodiments, the core network element 900 further includes a first receiving unit. The first receiving unit is configured to receive a first request sent by a second network element, the first request being for requesting positioning of the terminal device. The first request includes capability information of the terminal device and/or subscription information of the terminal device.

In some embodiments, the core network element 900 further includes a first sending unit. The first sending unit is configured to send location information of the terminal device to the second network element.

In some embodiments, capability information of the terminal device includes whether the terminal device has a first capability of performing positioning based on the first positioning model.

In some embodiments, subscription information of the terminal device includes whether the terminal device is authorized to use a positioning service based on the first positioning model.

In some embodiments, the core network element 900 further includes a second sending unit. the second sending unit is configured to send a second request to an MTLF through an AnLF, the second request being for requesting the third positioning model.

In some embodiments, the second request includes a model type of the third positioning model.

In some embodiments, the first network element is deployed jointly with the AnLF.

In some embodiments, the core network element 900 further includes a second receiving unit. The second receiving unit is configured to receive, through the AnLF, a third request sent by the MTLF, the third request being for requesting a positioning parameter for training the third positioning model.

In some embodiments, the core network element 900 further includes a third sending unit. The third sending unit is configured to send a fourth request to a first device, the fourth request being for collecting the positioning parameter.

In some embodiments, when the first device is a terminal device, the fourth request is transmitted through a long term evolution (LTE) positioning protocol; and when the first device is a network device corresponding to the terminal device, the fourth request is transmitted through a new radio (NR) positioning protocol a.

In some embodiments, when the first device is a terminal device, the positioning parameter is transmitted through a LTE positioning protocol; and when the first device is a network device corresponding to the terminal device, the positioning parameter is transmitted through an NR positioning protocol a.

In some embodiments, the core network element 900 further includes a third receiving unit and a fourth sending unit. The third receiving unit is configured to receive the positioning parameter. The fourth sending unit is configured to send, through the AnLF, the positioning parameter to the LMF.

In some embodiments, the first positioning model is an artificial intelligence (AI) model.

In some embodiments, the first network element is a location management function.

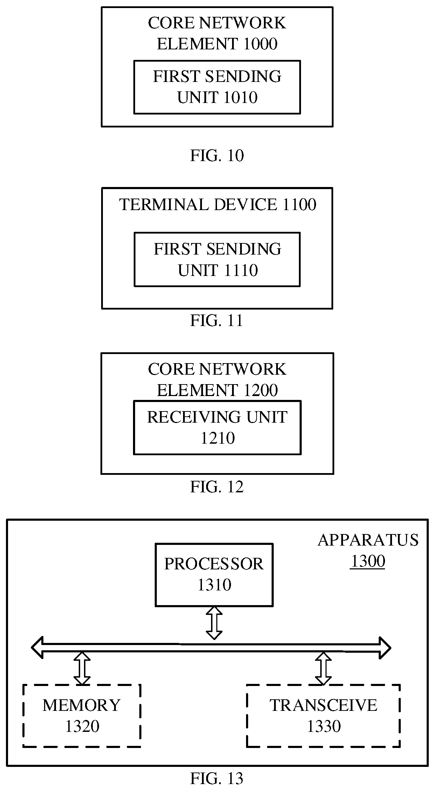

FIG. 10 is a schematic structural diagram of another core network element provided in an embodiment of the present disclosure. The core network element 1000 may be a second network element. The core network element 1000 may include a first sending unit 1010.

The first sending unit 1010 is configured to send a first request to a first network element, the first request being for requesting positioning of a terminal device. The first request is further used for the first network element to determine a first positioning mode of the terminal device, the first positioning mode includes positioning the terminal device based on a first positioning model, and the first positioning model includes a second positioning model deployed on the terminal device and/or a third positioning model deployed on the first network element.

In some embodiments, the first positioning mode is determined based on one or more of the following: capability information of the terminal device; subscription information of the terminal device; or capability information of the first network element.

In some embodiments, when the first positioning model is the second positioning model, the first positioning mode is determined based on at least one of capability information of the terminal device or subscription information of the terminal device.

In some embodiments, when the first positioning model is the third positioning model, the first positioning mode is determined based on at least one of capability information of the terminal device, subscription information of the terminal device, or capability information of the first network element.

In some embodiments, the first request includes capability information of the terminal device and/or subscription information of the terminal device.

In some embodiments, the core network element 1000 further includes a first receiving unit. The first receiving unit is configured to receive first information sent by the terminal device, the first information indicating capability information of the terminal device, the capability information of the terminal device including whether the terminal device has a first capability of performing positioning based on the first positioning model.

In some embodiments, the first information further indicates one or more of the following: whether the first capability is a direct positioning capability or an indirect positioning capability; an implementation condition of the first capability; or a parameter related to the first capability.

In some embodiments, the first information is registration request information of the terminal device.

In some embodiments, the core network element 1000 further includes a second sending unit. The second sending unit is configured to send a fifth request to a third network element, the fifth request being for requesting subscription information of the terminal device, the subscription information indicating whether the terminal device is authorized to use a positioning service based on the first positioning model.

In some embodiments, the subscription information includes artificial intelligence (AI) positioning subscription data.

In some embodiments, the AI positioning subscription data is indicated by a first field, the first field being an AI positioning service authorization field.

In some embodiments, the core network element 1000 further includes a second receiving unit and a third sending unit. The second receiving unit is configured to receive the subscription information of the terminal device sent by the third network element. The third sending unit is configured to send authorization information to the terminal device in response to the terminal device having the first capability and the subscription information of the terminal device indicating that the terminal device is authorized to use the positioning service based on the first positioning model.

In some embodiments, the core network element 1000 further includes a fourth sending unit. The fourth sending unit is configured to send the authorization information to a network device corresponding to the terminal device; where the authorization information is carried in a next-generation application protocol message.

In some embodiments, the first network element is one of multiple positioning-related network elements, and the core network element further includes a determining unit. The determining unit is configured to determine the first network element from the multiple network elements based on one or more of the following: capability information of the terminal device; subscription information of the terminal device; or capability information of the multiple network elements.

In some embodiments, the capability information of the multiple network elements is determined based on capability information of some or all of the multiple network elements configured by the second network element.

In some embodiments, when the first positioning model is the third positioning model, the first network element is determined by initial selection or reselection from the multiple network elements by the second network element.

In some embodiments, the multiple network elements are determined through configuration of the second network element and/or a network repository function.

In some embodiments, before sending, by the second network element, the first request to the first network element, the core network element further includes a third receiving unit. The third receiving unit is configured to receive a sixth request sent by a second device, the sixth request being for requesting location information of the terminal device. The second device includes the terminal device and/or a third-party device.

In some embodiments, the core network element 1000 further includes a fourth receiving unit and a fifth sending unit. The fourth receiving unit is configured to receive the location information of the terminal device sent by the first network element. The fifth sending unit is configured to send the location information of the terminal device to the terminal device and/or the third-party device.

In some embodiments, the first positioning model is an AI model.

In some embodiments, the second network element is an access and mobility management function (AMF).

FIG. 11 is a schematic structural diagram of a terminal device provided in an embodiment of the present disclosure. The terminal device 1100 may include a first sending unit 1110.

The sending unit 1110 is configured to send first information to a second network element, the first information indicating capability information of the terminal device, where the capability information of the terminal device includes whether the terminal device has a first capability of performing positioning based on a first positioning model, and the first positioning model includes a second positioning model deployed on the terminal device and/or a third positioning model deployed on a first network element.

In some embodiments, the first information further indicates one or more of the following: whether the first capability is a direct positioning capability or an indirect positioning capability; an implementation condition of the first capability; or a parameter related to the first capability.

In some embodiments, the first information is registration request information of the terminal device.

In some embodiments, when the first positioning model is the second positioning model, the capability information of the terminal device further includes a parameter of the second positioning model.

In some embodiments, the terminal device 1100 further includes a first receiving unit. The first receiving unit is configured to receive authorization information sent by the second network element, the authorization information indicating that the terminal device is authorized to use a positioning service based on the first positioning model.

In some embodiments, the terminal device 1100 further includes a second sending unit and a second receiving unit. The second sending unit is configured to send a sixth request to the second network element, the sixth request being for requesting location information of the terminal device. The second receiving unit is configured to receive the location information of the terminal device sent by the second network element.

In some embodiments, the first positioning model is an artificial intelligence (AI) model.

FIG. 12 is a schematic structural diagram of yet another core network element provided in an embodiment of the present disclosure. The core network element 1200 may be a third network element. The core network element 1200 may include a receiving unit 1210.

The receiving unit 1210 is configured to receive a fifth request sent by a second network element, where the fifth request is for requesting subscription information of a terminal device, the subscription information indicates whether the terminal device is authorized to use a positioning service based on a first positioning model, and the first positioning model includes a second positioning model deployed on the terminal device and/or a third positioning model deployed on a first network element.

In some embodiments, the subscription information includes artificial intelligence (AI) positioning subscription data.

In some embodiments, the AI positioning subscription data is indicated by a first field, the first field being an AI positioning service authorization field.

In some embodiments, the core network element 1210 further includes a sending unit. The sending unit is configured to send the subscription information of the terminal device to the second network element.

In some embodiments, the first positioning model is an AI model.

In some embodiments, where the third network element is a unified data management (UDM) entity.

FIG. 13 is a schematic structural diagram of a communication apparatus provided in embodiments of the present disclosure. Dotted lines illustrated in FIG. 13 indicate that a unit or a module is optional. The apparatus 1300 can be configured to implement the method illustrated in the method embodiments. The apparatus 1300 may be a chip, a terminal device, or a network device.

The apparatus 1300 may include one or more processors 1310. The processor 1310 may support the apparatus 1300 to implement the method illustrated in the method embodiments. The processor 1310 may be a general-purpose processor or a special-purpose processor. For example, the processor may be a central processing unit (CPU). Alternatively, the processor may also be another general-purpose processor, a digital signal processor (DSP), an application-specific integrated circuit (ASIC), a field programmable gate array (FPGA), or other programmable logic devices, discrete gates or transistor logic devices, discrete hardware components, etc. The general-purpose processor may be a microprocessor, the processor may be any conventional processor, etc.

The apparatus 1300 may further include one or more memories 1320. The memory 1320 is configured to store a program which, when executed by the processor 1310, causes the processor 1310 to perform the method illustrated in the method embodiments. The memory 1320 may be independent of the processor 1310 or may be integrated into the processor 1310.

The apparatus 1300 may further include a transceiver 1330. The processor 1310 may communicate with other devices or chips through the transceiver 1330. For example, the processor 1310 may send data to and receive data from other devices or chips through the transceiver 1330.

A computer-readable storage medium is further provided in embodiments of the present disclosure. The computer-readable storage medium is configured to store a program. The computer-readable storage medium is applicable to the core network element and/or the terminal device provided in embodiments of the present disclosure. The program causes a computer to perform the method performed by the core network element and/or the terminal device in various embodiments of the present disclosure.

A computer program product is further provided in embodiments of the present disclosure. The computer program product includes a program. The computer program product is applicable to the core network element and/or the terminal device provided in embodiments of the present disclosure. The program causes a computer to perform the method performed by the core network element and/or the terminal device in various embodiments of the present disclosure.

A computer program is further provided in embodiments of the present disclosure. The computer program is applicable to the core network element and/or the terminal device provided in embodiments of the present disclosure. The computer program causes a computer to perform the method performed by the core network element and/or the terminal device in various embodiments of the present disclosure.

It may be understood that, the terms "system" and "network" herein are usually used interchangeably throughout this disclosure. In addition, terms used in the present disclosure are merely intended for explaining embodiments of the present disclosure rather than limiting the present disclosure. The terms "first", "second", "third", "fourth", and the like used in the specification, the claims, and the accompanying drawings of the present disclosure are used to distinguish different objects rather than describe a particular order. In addition, the terms "include", "comprise", and "have" as well as variations thereof are intended to cover a non-exclusive inclusion.

In embodiments of the present disclosure, "indication" mentioned may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In embodiments of the present disclosure, "B corresponding to A" indicates that B is associated with A, and B may be determined according to A. However, it may be further understood that, "determine B according to A" does not mean that B is determined according to A only, and B may also be determined according to A and/or other information.

In embodiments of the present disclosure, the term "correspondence" may mean that there is a direct or indirect correspondence between the two, may mean that there is an association between the two, may mean a relationship of indicating and indicated or configuring and configured, etc.

In embodiments of the present disclosure, "pre-defined" or "pre-configured" can be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In embodiments of the present disclosure, the "protocol" may refer to a communication standard protocol, which may include, for example, an LTE protocol, an NR protocol, and a protocol applied to a future communication system, and the present disclosure is not limited in this regard.

It may be understood that, the term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

In various embodiments of the present disclosure, the magnitude of a sequence number of each of the foregoing processes does not mean an execution order, and an execution order of each process may be determined according to a function and an internal logic of the process, which shall not constitute any limitation to an embodiment process of embodiments of the present disclosure.

It will be appreciated that, the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the present disclosure are performed. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device, such as a server, a data center, etc., that integrates one or more usable media. The usable medium may be a magnetic medium (such as a soft disk, a hard disk, or a magnetic tape), an optical medium (such as a digital video disc (DVD)), a semiconductor medium (such as a solid state disk (SSD)), etc.

The foregoing elaborations are merely embodiments of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A wireless communication method, comprising:
determining, by a first network element, a first positioning mode of a terminal device, the first positioning mode comprising positioning the terminal device based on a first positioning model, the first positioning model comprising a second positioning model deployed on the terminal device and/or a third positioning model deployed on the first network element.

2. The method according to claim 1, wherein the first positioning mode is determined based on one or more of the following: capability information of the terminal device; subscription information of the terminal device; or capability information of the first network element.

3. The method according to claim 1 or 2, wherein when the first positioning model is the second positioning model, the first positioning mode is determined based on at least one of capability information of the terminal device or subscription information of the terminal device.

4. The method according to claim 1 or 2, wherein when the first positioning model is the third positioning model, the first positioning mode is determined based on at least one of capability information of the terminal device, subscription information of the terminal device, or capability information of the first network element.

5. The method according to any one of claims 1 to 4, further comprising:
receiving, by the first network element, a first request sent by a second network element, the first request being for requesting positioning of the terminal device;
wherein the first request comprises capability information of the terminal device and/or subscription information of the terminal device.

6. The method according to claim 5, further comprising:
sending, by the first network element, location information of the terminal device to the second network element.

7. The method according to any one of claims 1 to 6, wherein capability information of the terminal device comprises whether the terminal device has a first capability of performing positioning based on the first positioning model.

8. The method according to any one of claims 1 to 7, wherein subscription information of the terminal device comprises whether the terminal device is authorized to use a positioning service based on the first positioning model.

9. The method according to any one of claims 1 to 8, further comprising:
sending, by the first network element, a second request to a model training logical function (MTLF) through an analytics logical function (AnLF), the second request being for requesting the third positioning model.

10. The method according to claim 9, wherein the second request comprises a model type of the third positioning model.

11. The method according to claim 9 or 10, wherein the first network element is deployed jointly with the AnLF.

12. The method according to any one of claims 9 to 11, further comprising:
receiving, by the first network element through the AnLF, a third request sent by the MTLF, the third request being for requesting a positioning parameter for training the third positioning model.

13. The method according to claim 12, further comprising:
sending, by the first network element, a fourth request to a first device, the fourth request being for collecting the positioning parameter.

14. The method according to claim 13, wherein when the first device is a terminal device, the fourth request is transmitted through a long term evolution (LTE) positioning protocol; and when the first device is a network device corresponding to the terminal device, the fourth request is transmitted through a new radio (NR) positioning protocol (NRPP) a.

15. The method according to claim 13 or 14, wherein when the first device is a terminal device, the positioning parameter is transmitted through a LTE positioning protocol; and when the first device is a network device corresponding to the terminal device, the positioning parameter is transmitted through an NR positioning protocol a.

16. The method according to any one of claims 12 to 15, further comprising:
receiving, by the first network element, the positioning parameter; and
sending, by the first network element through the AnLF, the positioning parameter to the MTLF.

17. The method according to any one of claims 1 to 16, wherein the first positioning model is an artificial intelligence (AI) model.

18. The method according to any one of claims 1 to 17, wherein the first network element is a location management function (LMF).

19. A method for wireless communication, comprising:
sending, by a second network element, a first request to a first network element, the first request being for requesting positioning of a terminal device;
wherein the first request is further used for the first network element to determine a first positioning mode of the terminal device, the first positioning mode comprises positioning the terminal device based on a first positioning model, and the first positioning model comprises a second positioning model deployed on the terminal device and/or a third positioning model deployed on the first network element.

20. The method according to claim 19, wherein the first positioning mode is determined based on one or more of the following: capability information of the terminal device; subscription information of the terminal device; or capability information of the first network element.

21. The method according to claim 19 or 20, wherein when the first positioning model is the second positioning model, the first positioning mode is determined based on at least one of capability information of the terminal device or subscription information of the terminal device.

22. The method according to claim 19 or 20, wherein when the first positioning model is the third positioning model, the first positioning mode is determined based on at least one of capability information of the terminal device, subscription information of the terminal device, or capability information of the first network element.

23. The method according to any one of claims 19 to 22, wherein the first request comprises capability information of the terminal device and/or subscription information of the terminal device.

24. The method according to any one of claims 19 to 23, further comprising:
receiving, by the second network element, first information sent by the terminal device, the first information indicating capability information of the terminal device, the capability information of the terminal device comprising whether the terminal device has a first capability of performing positioning based on the first positioning model.

25. The method according to claim 24, wherein the first information further indicates one or more of the following:
whether the first capability is a direct positioning capability or an indirect positioning capability; an implementation condition of the first capability; or a parameter related to the first capability.

26. The method according to claim 24 or 25, wherein the first information is registration request information of the terminal device.

27. The method according to any one of claims 19 to 26, further comprising:
sending, by the second network element, a fifth request to a third network element, the fifth request being for requesting subscription information of the terminal device, the subscription information indicating whether the terminal device is authorized to use a positioning service based on the first positioning model.

28. The method according to claim 27, wherein the subscription information comprises artificial intelligence (AI) positioning subscription data.

29. The method according to claim 28, wherein the AI positioning subscription data is indicated by a first field, the first field being an AI positioning service authorization field.

30. The method according to any one of claims 27 to 29, further comprising:
receiving, by the second network element, the subscription information of the terminal device sent by the third network element;
sending, by the second network element, authorization information to the terminal device in response to the terminal device having the first capability and the subscription information of the terminal device indicating that the terminal device is authorized to use the positioning service based on the first positioning model.

31. The method according to claim 30, further comprising:
sending, by the second network element, the authorization information to a network device corresponding to the terminal device; wherein the authorization information is carried in a next-generation application protocol message.

32. The method according to any one of claims 19 to 31, wherein the first network element is one of a plurality of positioning-related network elements, and the method further comprises:
determining, by the second network element, the first network element from a plurality of network elements based on one or more of the following: capability information of the terminal device; subscription information of the terminal device; or capability information of the plurality of network elements.

33. The method according to claim 32, wherein the capability information of the plurality of network elements is determined based on capability information of some or all of the plurality of network elements configured by the second network element.

34. The method according to claim 32 or 33, wherein when the first positioning model is the third positioning model, the first network element is determined by initial selection or reselection from the plurality of network elements by the second network element.

35. The method according to any one of claims 32 to 34, wherein the plurality of network elements are determined through configuration of the second network element and/or a network repository function (NRF).

36. The method according to any one of claims 19 to 35, wherein before sending, by the second network element, the first request to the first network element, the method further comprises:
receiving, by the second network element, a sixth request sent by a second device, the sixth request being for requesting location information of the terminal device; wherein the second device comprises the terminal device and/or a third-party device.

37. The method according to claim 36, further comprising:
receiving, by the second network element, the location information of the terminal device sent by the first network element; and
sending, by the second network element, the location information of the terminal device to the terminal device and/or the third-party device.

38. The method according to any one of claims 19 to 37, wherein the first positioning model is an AI model.

39. The method according to any one of claims 19 to 38, wherein the second network element is an access and mobility management function (AMF).

40. A method for wireless communication, comprising:
sending, by a terminal device, first information to a second network element, the first information indicating capability information of the terminal device, the capability information of the terminal device comprising whether the terminal device has a first capability of performing positioning based on a first positioning model, and the first positioning model comprising a second positioning model deployed on the terminal device and/or a third positioning model deployed on a first network element.

41. The method according to claim 40, wherein the first information further indicates one or more of the following:
whether the first capability is a direct positioning capability or an indirect positioning capability; an implementation condition of the first capability; or a parameter related to the first capability.

42. The method according to claim 40 or 41, wherein the first information is registration request information of the terminal device.

43. The method according to any one of claims 40 to 42, wherein when the first positioning model is the second positioning model, the capability information of the terminal device further comprises a parameter of the second positioning model.

44. The method according to any one of claims 40 to 43, further comprising:
receiving, by the terminal device, authorization information sent by the second network element, the authorization information indicating that the terminal device is authorized to use a positioning service based on the first positioning model.

45. The method according to any one of claims 40 to 44, further comprising:
sending, by the terminal device, a sixth request to the second network element, the sixth request being for requesting location information of the terminal device; and
receiving, by the terminal device, the location information of the terminal device sent by the second network element.

46. The method according to any one of claims 40 to 45, wherein the first positioning model is an artificial intelligence (AI) model.

47. A method for wireless communication, comprising:
receiving, by a third network element, a fifth request sent by a second network element, the fifth request being for requesting subscription information of a terminal device, the subscription information indicating whether the terminal device is authorized to use a positioning service based on a first positioning model, and the first positioning model comprising a second positioning model deployed on the terminal device and/or a third positioning model deployed on a first network element.

48. The method according to claim 47, wherein the subscription information comprises artificial intelligence (AI) positioning subscription data.

49. The method according to claim 48, wherein the AI positioning subscription data is indicated by a first field, the first field being an AI positioning service authorization field.

50. The method according to any one of claims 47 to 49, further comprising:
sending, by the third network element, the subscription information of the terminal device to the second network element.

51. The method according to any one of claims 47 to 50, wherein the first positioning model is an AI model.

52. The method according to any one of claims 47 to 51, wherein the third network element is a unified data management (UDM) entity.

53. A core network element, the core network element being a first network element and comprising:
a determining unit configured to determine a first positioning mode of a terminal device, the first positioning mode comprising positioning the terminal device based on a first positioning model, the first positioning model comprising a second positioning model deployed on the terminal device and/or a third positioning model deployed on the first network element.

54. The core network element according to claim 53, wherein the first positioning mode is determined based on one or more of the following: capability information of the terminal device; subscription information of the terminal device; or capability information of the first network element.

55. The core network element according to claim 53 or 54, wherein when the first positioning model is the second positioning model, the first positioning mode is determined based on at least one of capability information of the terminal device or subscription information of the terminal device.

56. The core network element according to claim 53 or 54, wherein when the first positioning model is the third positioning model, the first positioning mode is determined based on at least one of capability information of the terminal device, subscription information of the terminal device, or capability information of the first network element.

57. The core network element according to any one of claims 53 to 56, further comprising:
a first receiving unit configured to receive a first request sent by a second network element, the first request being for requesting positioning of the terminal device;
wherein the first request comprises capability information of the terminal device and/or subscription information of the terminal device.

58. The core network element according to claim 57, further comprising:
a first sending unit configured to send location information of the terminal device to the second network element.

59. The core network element according to any one of claims 53 to 58, wherein capability information of the terminal device comprises whether the terminal device has a first capability of performing positioning based on the first positioning model.

60. The core network element according to any one of claims 53 to 59, wherein subscription information of the terminal device comprises whether the terminal device is authorized to use a positioning service based on the first positioning model.

61. The core network element according to any one of claims 53 to 60, further comprising:
a second sending unit configured to send a second request to a model training logical function (MTLF) through an analytics logical function (AnLF), the second request being for requesting the third positioning model.

62. The core network element according to claim 61, wherein the second request comprises a model type of the third positioning model.

63. The core network element according to claim 61 or 62, wherein the first network element is deployed jointly with the AnLF.

64. The core network element according to any one of claims 61 to 63, further comprising:
a second receiving unit configured to receive, through the AnLF, a third request sent by the MTLF, the third request being for requesting a positioning parameter for training the third positioning model.

65. The core network element according to claim 64, further comprising:
a third sending unit configured to send a fourth request to a first device, the fourth request being for collecting the positioning parameter.

66. The core network element according to claim 65, wherein when the first device is a terminal device, the fourth request is transmitted through a long term evolution (LTE) positioning protocol; and when the first device is a network device corresponding to the terminal device, the fourth request is transmitted through a new radio (NR) positioning protocol (NRPP) a.

67. The core network element according to claim 65 or 66, wherein when the first device is a terminal device, the positioning parameter is transmitted through a LTE positioning protocol; and when the first device is a network device corresponding to the terminal device, the positioning parameter is transmitted through an NR positioning protocol a.

68. The core network element according to any one of claims 64 to 67, further comprising:
a third receiving unit configured to receive the positioning parameter; and
a fourth sending unit configured to send, through the AnLF, the positioning parameter to the MTLF.

69. The core network element according to any one of claims 53 to 68, wherein the first positioning model is an artificial intelligence (AI) model.

70. The core network element according to any one of claims 53 to 69, wherein the first network element is a location management function (LMF).

71. A core network element, the core network element being a second network element and comprising:
a first sending unit configured to send a first request to a first network element, the first request being for requesting positioning of a terminal device;
wherein the first request is further used for the first network element to determine a first positioning mode of the terminal device, the first positioning mode comprises positioning the terminal device based on a first positioning model, and the first positioning model comprises a second positioning model deployed on the terminal device and/or a third positioning model deployed on the first network element.

72. The core network element according to claim 71, wherein the first positioning mode is determined based on one or more of the following: capability information of the terminal device; subscription information of the terminal device; or capability information of the first network element.

73. The core network element according to claim 71 or 72, wherein when the first positioning model is the second positioning model, the first positioning mode is determined based on at least one of capability information of the terminal device or subscription information of the terminal device.

74. The core network element according to claim 71 or 72, wherein when the first positioning model is the third positioning model, the first positioning mode is determined based on at least one of capability information of the terminal device, subscription information of the terminal device, or capability information of the first network element.

75. The core network element according to any one of claims 71 to 74, wherein the first request comprises capability information of the terminal device and/or subscription information of the terminal device.

76. The core network element according to any one of claims 71 to 75, further comprising:
a first receiving unit configured to receive first information sent by the terminal device, the first information indicating capability information of the terminal device, the capability information of the terminal device comprising whether the terminal device has a first capability of performing positioning based on the first positioning model.

77. The core network element according to claim 76, wherein the first information further indicates one or more of the following:
whether the first capability is a direct positioning capability or an indirect positioning capability; an implementation condition of the first capability; or a parameter related to the first capability.

78. The core network element according to claim 76 or 77, wherein the first information is registration request information of the terminal device.

79. The core network element according to any one of claims 71 to 78, further comprising:
a second sending unit configured to send a fifth request to a third network element, the fifth request being for requesting subscription information of the terminal device, the subscription information indicating whether the terminal device is authorized to use a positioning service based on the first positioning model.

80. The core network element according to claim 79, wherein the subscription information comprises artificial intelligence (AI) positioning subscription data.

81. The core network element according to claim 80, wherein the AI positioning subscription data is indicated by a first field, the first field being an AI positioning service authorization field.

82. The core network element according to any one of claims 79 to 81, further comprising:
a second receiving unit configured to receive the subscription information of the terminal device sent by the third network element; and
a third sending unit configured to send authorization information to the terminal device in response to the terminal device having the first capability and the subscription information of the terminal device indicating that the terminal device is authorized to use the positioning service based on the first positioning model.

83. The core network element according to claim 82, further comprising:
a fourth sending unit configured to send the authorization information to a network device corresponding to the terminal device; wherein the authorization information is carried in a next-generation application protocol message.

84. The core network element according to any one of claims 71 to 83, wherein the first network element is one of a plurality of positioning-related network elements, and the core network element further comprises:
a determining unit configured to determine the first network element from the plurality of network elements based on one or more of the following: capability information of the terminal device; subscription information of the terminal device; or capability information of the plurality of network elements.

85. The core network element according to claim 84, wherein the capability information of the plurality of network elements is determined based on capability information of some or all of the plurality of network elements configured by the second network element.

86. The core network element according to claim 84 or 85, wherein when the first positioning model is the third positioning model, the first network element is determined by initial selection or reselection from the plurality of network elements by the second network element.

87. The core network element according to any one of claims 84 to 86, wherein the plurality of network elements are determined through configuration of the second network element and/or a network repository function (NRF).

88. The core network element according to any one of claims 71 to 87, wherein before sending, by the second network element, the first request to the first network element, the core network element further comprises:
a third receiving unit configured to receive a sixth request sent by a second device, the sixth request being for requesting location information of the terminal device; wherein the second device comprises the terminal device and/or a third-party device.

89. The core network element according to claim 88, further comprising:
a fourth receiving unit configured to receive the location information of the terminal device sent by the first network element; and
a fifth sending unit configured to send the location information of the terminal device to the terminal device and/or the third-party device.

90. The core network element according to any one of claims 71 to 89, wherein the first positioning model is an AI model.

91. The core network element according to any one of claims 70 to 90, wherein the second network element is an access and mobility management function (AMF).

92. A terminal device, comprising:
a sending unit configured to send first information to a second network element, the first information indicating capability information of the terminal device, the capability information of the terminal device comprising whether the terminal device has a first capability of performing positioning based on a first positioning model, and the first positioning model comprising a second positioning model deployed on the terminal device and/or a third positioning model deployed on a first network element.

93. The terminal device according to claim 92, wherein the first information further indicates one or more of the following:
whether the first capability is a direct positioning capability or an indirect positioning capability; an implementation condition of the first capability; or a parameter related to the first capability.

94. The terminal device according to claim 92 or 93, wherein the first information is registration request information of the terminal device.

95. The terminal device according to any one of claims 92 to 94, wherein when the first positioning model is the second positioning model, the capability information of the terminal device further comprises a parameter of the second positioning model.

96. The terminal device according to any one of claims 92 to 95, further comprising:
a first receiving unit configured to receive authorization information sent by the second network element, the authorization information indicating that the terminal device is authorized to use a positioning service based on the first positioning model.

97. The terminal device according to any one of claims 92 to 96, further comprising:
a second sending unit configured to send a sixth request to the second network element, the sixth request being for requesting location information of the terminal device; and
a second receiving unit configured to receive the location information of the terminal device sent by the second network element.

98. The terminal device according to any one of claims 92 to 97, wherein the first positioning model is an artificial intelligence (AI) model.

99. A core network element, the core network element being a third network element and comprising:
a receiving unit configured to receive a fifth request sent by a second network element, the fifth request being for requesting subscription information of a terminal device, the subscription information indicating whether the terminal device is authorized to use a positioning service based on a first positioning model, and the first positioning model comprising a second positioning model deployed on the terminal device and/or a third positioning model deployed on a first network element.

100. The core network element according to claim 99, wherein the subscription information comprises artificial intelligence (AI) positioning subscription data.

101. The core network element according to claim 100, wherein the AI positioning subscription data is indicated by a first field, the first field being an AI positioning service authorization field.

102. The core network element according to any one of claims 99 to 101, further comprising:
a sending unit configured to send the subscription information of the terminal device to the second network element.

103. The core network element according to any one of claims 99 to 102, wherein the first positioning model is an AI model.

104. The core network element according to any one of claims 99 to 103, wherein the third network element is a unified data management (UDM) entity.

105. A core network element, comprising a memory and a processor, the memory being configured to store a program, and the processor being configured to invoke the program in the memory to perform the method according to any one of claims 1 to 18, 19 to 40, or 47 to 52.

106. A terminal device, comprising a memory and a processor, the memory being configured to store a program, and the processor being configured to invoke the program in the memory to perform the method according to any one of claims 41 to 46.

107. A chip, comprising a processor configured to invoke a program from a memory, to cause a device equipped with the chip to perform the method according to any one of claims 1 to 18, 19 to 40, 41 to 46, or 47 to 52.

108. A computer-readable storage medium, having a program stored thereon, the program causing a computer to perform the method according to any one of claims 1 to 18, 19 to 40, 41 to 46, or 47 to 52.

109. A computer program product, comprising a program, the program causing a computer to perform the method according to any one of claims 1 to 18, 19 to 40, 41 to 46, or 47 to 52.

110. A computer program, the computer program causing a computer to perform the method according to any one of claims 1 to 18, 19 to 40, 41 to 46, or 47 to 52.
